(19) Europäisches Patentamt
European Patent Office
Office européen des brevets

(11) **EP 1 003 656 B1**

(12) **FASCICULE DE BREVET EUROPEEN**

(45) Date de publication et mention
de la délivrance du brevet:
**09.08.2006 Bulletin 2006/32**

(51) Int Cl.:
***B60T 7/10*** *(2006.01)*     ***G05D 3/10*** *(2006.01)*
***B60T 13/74*** *(2006.01)*

(21) Numéro de dépôt: **99925100.2**

(22) Date de dépôt: **15.06.1999**

(86) Numéro de dépôt international:
**PCT/FR1999/001430**

(87) Numéro de publication internationale:
**WO 1999/065744 (23.12.1999 Gazette 1999/51)**

(54) **PROCEDE ET DISPOSITIF DE COMMANDE D'UN ACTIONNEUR ELECTRIQUE D'ACTIVATION D'UN SYSTEME FONCTIONNEL**

METHODE UND VORRICHTUNG ZUR ANSTEUERUNG EINES ELEKTRISCHEN STELLGLIEDES WELCHES EINE FUNKTIONSBAUGRUPPE AKTIVIERT

METHOD AND DEVICE FOR CONTROLLING AN ELECTRIC ACTUATOR ACTIVATING A FUNCTIONAL SYSTEM

(84) Etats contractants désignés:
**CH DE ES GB IT LI PT SE**

(30) Priorité: **15.06.1998 FR 9807524**

(43) Date de publication de la demande:
**31.05.2000 Bulletin 2000/22**

(73) Titulaires:
• **AUTOMOBILES PEUGEOT**
  **75116 Paris (FR)**
• **AUTOMOBILES CITROEN**
  **92200 Neuilly-sur-Seine (FR)**

(72) Inventeurs:
• **PERRAULT, Hervé**
  **F-75015 Paris (FR)**
• **GOLY, Fabrice**
  **F-95610 Eragny/Oise (FR)**

(74) Mandataire: **Habasque, Etienne J. Jean-François et al**
**Cabinet Lavoix**
**2, Place d'Estienne d'Orves**
**75441 Paris Cédex 09 (FR)**

(56) Documents cités:
**EP-A- 0 263 912          DE-A- 4 129 919**
**DE-A- 4 218 717          US-A- 5 270 932**

## Description

La présente invention concerne un procédé et un dispositif de commande d'un actionneur électrique d'activation d'un système fonctionnel, comportant un organe de commande actionnable par un utilisateur pour piloter l'alimentation de l'actionneur.

Un tel système fonctionnel peut être constitué par un frein secondaire de véhicule automobile.

On connaît des dispositifs de freins secondaires, c'est-à-dire de freins de parcage, dont l'activation est assurée par des actionneurs électriques dont le fonctionnement est piloté par un utilisateur par l'intermédiaire d'un organe de commande permettant de contrôler l'alimentation de l'actionneur.

L'organe de commande est constitué dans de tels dispositifs notamment par un interrupteur permettant d'alimenter ou non l'actionneur, c'est-à-dire en fait de provoquer un serrage ou un desserrage complet du frein secondaire du véhicule.

Des systèmes de ce type comportent également des moyens électroniques de gestion de l'alimentation de l'actionneur en fonction d'informations issues de capteurs par exemple de vitesse de rotation des roues du véhicule tels que ceux utilisés dans les systèmes d'anti-blocage de roues.

Cependant, de tels moyens présentent un certain nombre d'inconvénients, notamment au niveau de leur coût, de leur fonctionnement et de leur manipulation par un utilisateur.

En effet, on sait que la gestion du maintien d'un véhicule à l'arrêt dans une pente est relativement simple à gérer avec une telle interface, en alimentant par exemple l'actionneur sous une pleine tension.

Mais l'information fournie au dispositif par l'utilisateur à travers une telle interface, est du type tout ou rien, alors qu'en utilisant un levier de frein traditionnel permettant de mettre sous tension des câbles de serrage du frein secondaire, l'utilisateur gère la tension du câble et sa vitesse de mise en tension et régule celle-ci en fonction de la décélération du véhicule.

On conçoit qu'il est souhaitable pour diverses raisons de conserver de telles fonctionnalités.

On connaît déjà du document US-A-5 270 932, un procédé et un dispositif de commande conformes aux préambules des revendications 1 et 3.

Cependant, le procédé et le dispositif décrits dans ce document présentent un certain nombre d'inconvénients, notamment au niveau de la précision de l'actionnement.

En effet, un tel procédé et un tel dispositif ne prennent pas en compte l'inertie du système fonctionnel ni ses caractéristiques de frottement.

Le but de l'invention est donc de résoudre ces problèmes avec un coût minimal.

A cet effet, l'invention a pour objet un procédé de commande d'un actionneur électrique d'activation d'un système fonctionnel, notamment d'un frein secondaire de véhicule automobile, du type comportant un organe de commande actionnable par un utilisateur pour piloter l'alimentation de l'actionneur, comportant les étapes suivantes :

a) on estime les déplacements de l'organe de commande, en sens et en amplitude, le long d'une course de déplacement de celui-ci entre des positions extrêmes de commande de l'actionneur, et

b) on analyse ces déplacements pour en tirer une information de commande de moyens d'alimentation de l'actionneur pour appliquer à celui-ci une quantité de courant correspondant au déplacement de l'organe de commande, déterminée à partir d'une loi de correspondance prédéterminée et de moyens de cumul des déplacements successifs de l'actionneur lors de ses différentes commandes, mis à jour après chaque nouvelle commande de celui-ci, pour asservir la position de l'actionneur à la position de l'organe de commande, caractérisé en ce que l'on filtre les quantités de courant inférieures à un seuil prédéterminé et on cumule ces dernières pour les restituer à l'actionneur lorsque ce cumul est suffisant pour activer l'actionneur.

Selon un autre aspect, l'invention a également pour objet un dispositif de commande d'un actionneur électrique d'activation d'un système fonctionnel, notamment d'un frein secondaire de véhicule automobile, par la mise en oeuvre d'un procédé, du type comportant un organe de commande actionnable par un utilisateur pour piloter l'alimentation de l'actionneur, comportant :

a) des moyens d'estimation des déplacements de l'organe de commande, en sens et en amplitude, le long d'une course de déplacement de celui-ci entre des positions extrêmes de commande de l'actionneur, et

b) des moyens d'analyse de ces déplacements pour en tirer une information de commande de moyens d'alimentation de l'actionneur pour appliquer à celui-ci une quantité de courant correspondant au déplacement de l'organe de commande, déterminée par ces moyens d'analyse à partir d'une loi de correspondance prédéterminée et stockée dans ceux-ci et de moyens de cumul des déplacements successifs de l'actionneur lors de ses différentes commandes, mis à jour après chaque nouvelle commande de celui-ci par ces moyens d'analyse, afin d'asservir la position de l'actionneur à la position de l'organe de commande, caractérisé en ce qu'il comporte des moyens de filtrage des quantités de courant inférieures à un seuil prédéterminé et des moyens de cumul de ces dernières pour les restituer à l'actionneur lorsque ce cumul est suffisant pour activer l'actionneur.

L'invention sera mieux comprise à l'aide de la description qui va suivre, donnée uniquement à titre d'exemple et faite en se référant aux dessins annexés, sur lesquels :

- la Fig.1 représente un schéma synoptique illustrant l'implantation d'un dispositif de commande d'un actionneur électrique d'activation d'un système fonctionnel tel qu'un frein secondaire de véhicule automobile;
- la Fig.2 représente un schéma synoptique illustrant la structure et le fonctionnement d'un tel dispositif; et
- les Figs.3 et 4 représentent des graphes illustrant la détermination de la quantité de courant.

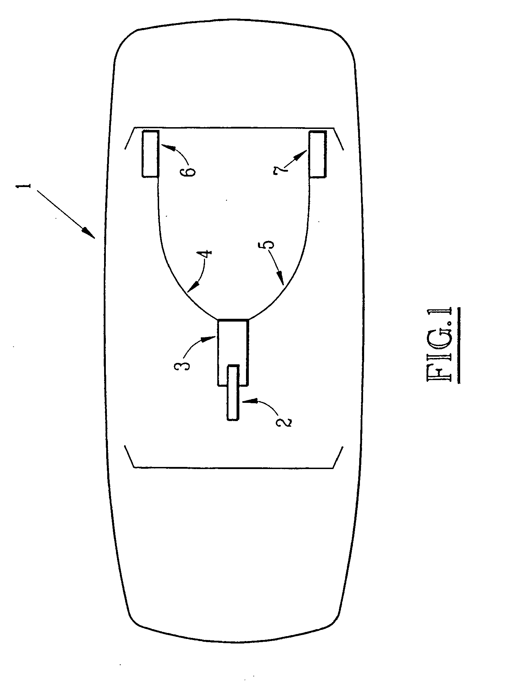

On a en effet représenté sur la figure 1, un véhicule automobile désigné par la référence générale 1, qui est équipé d'un système fonctionnel tel qu'un frein secondaire également connu dans l'état de la technique sous le nom de frein de parcage.

Ce système fonctionnel comporte un organe de commande actionnable par un utilisateur, désigné par la référence générale 2 et comportant par exemple un levier.

Ce levier est associé à un actionneur électrique désigné par la référence générale 3, permettant de contrôler la mise sous tension de câbles, par exemple 4 et 5, de mise sous tension des étriers 6 et 7 de freinage des roues arrière du véhicule.

En fait, l'actionneur électrique 3 peut comporter un moteur électrique associé à des moyens d'enroulement/déroulement des câbles d'actionnement du frein secondaire du véhicule.

Dans un souci d'économie d'un tel actionneur, le moteur électrique est de préférence un moteur électrique du type à courant continu.

Dans le procédé et le dispositif selon l'invention, on s'attache à ne pas perdre les fonctionnalités d'un frein secondaire classique de véhicule automobile, en proposant une interface équivalente à celle actuellement implantée dans les véhicules, c'est-à-dire qui permette à l'utilisateur de contrôler la tension du câble et sa vitesse de mise en tension et de réguler cette tension en fonction de la décélération du véhicule en réalisant une corrélation entre la position de l'organe de commande 2 et la tension des câbles.

Dans ce cas, la régulation de la tension des câbles se fait par l'utilisateur en asservissant la position de cet organe à la décélération du véhicule ressentie par cet utilisateur.

Pour réaliser un tel mécanisme, la solution la plus simple et la plus économique consiste à réaliser un asservissement entre la tension des câbles et une information de position de l'organe de commande délivrée par un capteur associé à celui-ci.

Cependant, ceci implique l'utilisation de capteurs d'effort sur les câbles, ce qui est une technologie relativement coûteuse.

Or, le critère de prix est un critère important et cet asservissement doit donc pouvoir être réalisé sans capteur de tension des câbles.

C'est ainsi que le procédé et le dispositif de commande selon l'invention utilisent des moyens d'alimentation de l'actionneur par des quantités de courant calculées en fonction des déplacements du levier ou organe de commande 2.

A cet effet, dans le procédé de commande selon l'invention, on estime les déplacements de l'organe de commande 2, en sens et en amplitude, le long d'une course de déplacement de celui-ci entre des positions extrêmes de commande de l'actionneur 3 et on analyse ces déplacements pour en tirer une information de commande de moyens d'alimentation de l'actionneur, pour appliquer à celui-ci une quantité de courant correspondant au déplacement de l'organe de commande. Cette quantité de courant $T_p$ est déterminée à partir d'une loi de correspondance prédéterminée et de moyens de cumul des déplacements X successifs de l'actionneur lors de ces différentes commandes, mis à jour après chaque nouvelle commande de celui-ci, pour asservir la position de l'actionneur à la position de l'organe de commande.

Ainsi, on établit une loi dépendant des caractéristiques mécaniques et électriques du système et du véhicule, entre les déplacements de l'organe de commande 2 et une quantité de courant $T_p$ à appliquer à l'actionneur pour asservir la position de cet actionneur à la position de l'organe de commande.

Un tel système fonctionnant en boucle ouverte, il peut être sujet à des dérives.

Celles-ci sont alors compensées par un étalonnage de la commande d'alimentation de l'actionneur à chaque passage en position extrême de la course de déplacement de l'organe de commande.

L'inertie du système fonctionnel ainsi que ses caractéristiques de frottement sont prises en compte par filtrage de l'alimentation appliquée à l'actionneur.

Ce filtrage supprime l'envoi d'une quantité de courant à l'actionneur lorsque celle-ci est inférieure à un seuil prédéterminé, c'est-à-dire est trop faible pour "décoller" ou activer le moteur, mais stocke et cumule numériquement ce qui a été filtré pour l'envoyer à l'actionneur lorsque la quantité de courant est suffisante pour activer le moteur.

On conçoit alors que dans le cas où l'actionneur comporte un moteur électrique associé à des moyens d'enroulement/déroulement d'un câble d'actionnement du système fonctionnel, la stratégie de pilotage décrite précédemment permet d'estimer l'enroulement/déroulement du câble par une décomposition des quantités de courant de commande de ce moteur.

En effet, pour assurer le pilotage du moteur, il convient de calculer la quantité de courant à appliquer au moteur pour obtenir un enroulement/déroulement des câbles correspondant au déplacement de l'organe de commande.

Les quantités de courant appliquées successivement à l'actionneur lors de ces différentes commandes sont alors stockées dans des moyens de cumul qui sont mis à jour après chaque nouvelle commande de celui-ci, le contenu de ceux-ci étant l'image de l'état d'enroulement/déroulement des câbles.

Le facteur permettant de convertir les déplacements de l'organe de commande en une quantité de courant appliquée au moteur est interpolé en fonction du contenu de ces moyens de cumul.

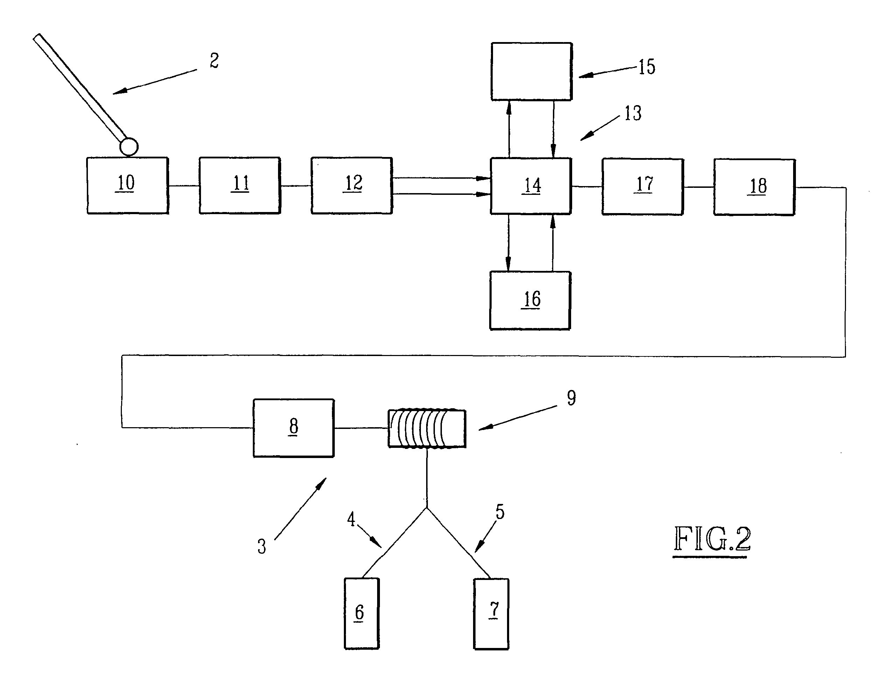

Un exemple de réalisation d'un dispositif de mise en oeuvre de ce procédé est décrit sur la figure 2.

On reconnaît en effet sur cette figure, l'organe de commande désigné par la référence générale 2 et l'actionneur électrique 3 d'activation du système fonctionnel, cet actionneur électrique comportant par exemple un moteur électrique 8 associé à des moyens d'enroulement/déroulement d'au moins un câble d'actionnement du système fonctionnel, ces moyens étant désignés par la référence générale 9, tandis que les câbles sont désignés par les références générales 4 et 5 et les étriers associés aux roues arrière du véhicule par les références 6 et 7.

L'organe de commande 2, c'est-à-dire en fait par exemple le levier, est associé à un capteur de position de type classique désigné par la référence générale 10 sur cette figure, dont la sortie est associée à des moyens d'étalonnage désignés par la référence générale 11, permettant de compenser les dérives du système en étalonnant la commande d'alimentation de l'actionneur à chaque passage en position extrême de la course de déplacement de l'organe de commande.

En effet, si l'organe de commande est en position de desserrage complet, les moyens d'alimentation de l'actionneur sont remis à zéro, tandis que si l'organe de commande est en position de serrage maximum, les moyens d'alimentation de l'actionneur appliquent sur celui-ci une alimentation maximale.

La sortie de ces moyens d'étalonnage est appliquée à des moyens d'estimation des déplacements de l'organe de commande 2, en sens et en amplitude, le long de la course de déplacement de celui-ci entre ses positions extrêmes, ces moyens d'estimation étant désignés par la référence générale 12 sur cette figure.

Ces moyens d'estimation permettent de délivrer au reste du circuit, des informations de sens et d'amplitude de déplacement de l'organe de commande.

Ces informations sont alors analysées par une unité de traitement d'informations désignée par la référence générale 13, comportant par exemple une unité de calcul désignée par la référence générale 14 associée à des moyens de mémorisation de données désignés par les références générales 15 et 16 sur cette figure.

Les moyens de mémorisation 15 sont par exemple adaptés pour stocker la loi de correspondance prédéterminée, telle que décrite précédemment, tandis que les moyens de mémorisation 16 sont adaptés pour stocker les quantités de courant appliquées successivement à l'actionneur lors de ses différentes commandes, ces moyens étant mis à jour après chaque nouvelle commande de celui-ci par l'unité de calcul 14.

La loi de correspondance mentionnée précédemment et les moyens de cumul permettent alors aux moyens de calcul 14 de déterminer une information de commande de moyens d'alimentation 17 de l'actionneur, pour appliquer à celui-ci des quantités de courant pour les déplacements de l'actionneur et dont le nombre est déterminé à partir de cette loi de correspondance prédéterminée et de ces moyens de cumul comme cela a été décrit précédemment.

Enfin, on notera également que ce dispositif comporte des moyens de diagnostic 18 de son fonctionnement.

Ces moyens sont par exemple basés sur une comparaison de l'alimentation calculée de l'actionneur, du type : Intensité moteur calculée = tension batterie mesurée/ résistance du moteur et de l'alimentation effective de celui-ci, c'est-à-dire l'intensité moteur mesurée.

Il va de soi bien entendu que d'autres moyens de diagnostic peuvent être envisagés.

On conçoit alors que grâce à une telle structure, on peut utiliser un organe de commande déplaçable le long d'une course entre des positions extrêmes de commande de l'actionneur et que l'on analyse les déplacements de cet organe de commande, en sens et en amplitude, pour acquérir des informations de la part de l'utilisateur concernant le pilotage de l'actionneur.

Ces informations de déplacement de l'organe de commande sont ensuite analysées pour déterminer une information de commande des moyens d'alimentation de l'actionneur pour appliquer à celui-ci, une quantité de courant qui est fonction du déplacement estimé de l'organe de commande.

Cette détermination est réalisée par une unité de traitement d'informations à partir d'une loi de correspondance prédéterminée prenant en compte les différentes caractéristiques du système fonctionnel qu'il y a lieu de piloter et des moyens de cumul des quantités de courant appliquées successivement à l'actionneur lors de ces différentes commandes, ces moyens de cumul étant mis à jour après chaque nouvelle commande de l'actionneur.

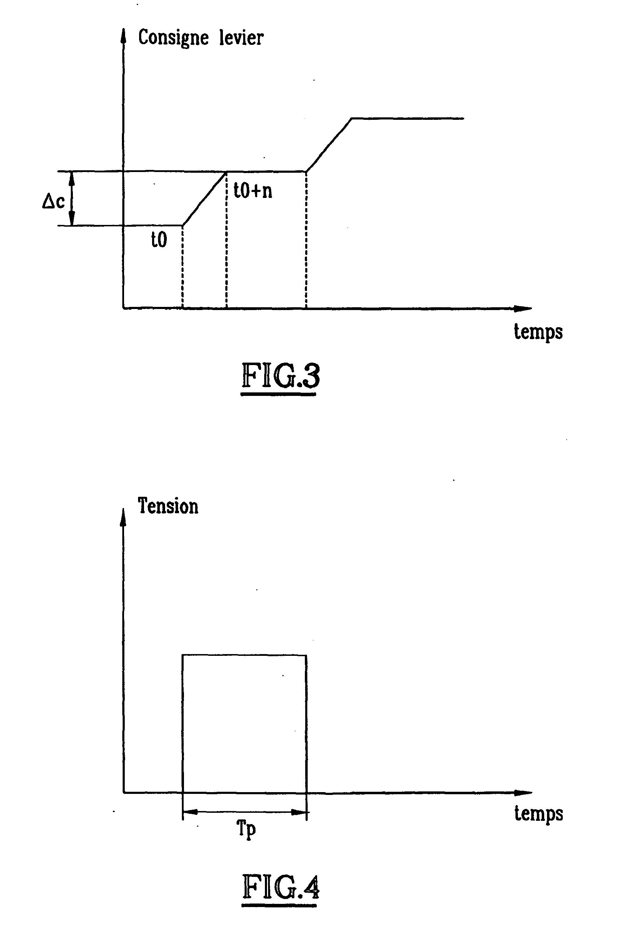

La détermination de cette quantité de courant est représentée sur les figures 3 et 4 qui montrent des graphes illustrant respectivement la consigne de l'organe de commande 2 et la quantité de courant nécessaire $T_p$.

La loi de correspondance entre ces deux valeurs est du type:

$$T_p = \Delta c \times \text{Coeff } k;$$

où : $T_p$ = quantité de courant;
$\Delta c$ = variation de la position du levier,
Coeff k = coefficient variable non linéaire permettant de compenser la non linéarité de l'enroulement, dépendant des déplacements X de l'actionneur.

On comprend que cette quantité de courant $T_p$

permet de déplacer le câble c'est-à-dire de l'enrouler ou de le dérouler d'une valeur X, celle-ci correspondant à :

$$X = T_p / T \text{ élémentaire;}$$

où T élémentaire = quantité de courant élémentaire.

Les moyens de cumul des déplacements estimés permettent avantageusement de déterminer la quantité de courant nécessaire $T_p$, ces moyens interférant directement sur la valeur du coefficient k.

Cette détermination permet de prendre en compte l'état d'enroulement du câble, car il faut beaucoup d'énergie et donc de quantité de courant pour enrouler le câble si celui-ci est déjà en majeure partie enroulé.

Ceci permet alors d'asservir la position de l'actionneur à la position de l'organe de commande.

Bien entendu, d'autres moyens comme par exemple d'autres formes d'organe de commande, peuvent être envisagés.

L'actionneur c'est-à-dire par exemple le moteur électrique et les moyens d'enroulement/déroulement des câbles, ainsi que les différents moyens électroniques associés à son pilotage peuvent être montés ensemble dans un bloc commun supportant le levier de commande.

Bien entendu, l'effort ressenti par l'utilisateur lors de la manoeuvre de cet organe peut être soit linéaire soit modulé par des moyens de freinage variable de son déplacement le long de sa course de déplacement, ces moyens comportant par exemple une came ou tout autre organe mécanique, électrique ou hydraulique permettant de faire varier l'effort à appliquer par l'utilisateur sur ce levier en fonction de sa position le long de sa course de déplacement.

**Revendications**

1. Procédé de commande d'un actionneur électrique (3) d'activation d'un système fonctionnel, notamment d'un frein secondaire de véhicule automobile, du type comportant un organe de commande (2) actionnable par un utilisateur pour piloter l'alimentation de l'actionneur, comportant les étapes suivantes :

   a) on estime les déplacements de l'organe de commande (2), en sens et en amplitude, le long d'une course de déplacement de celui-ci entre des positions extrêmes de commande de l'actionneur, et
   b) on analyse ces déplacements pour en tirer une information de commande de moyens d'alimentation (17) de l'actionneur (3) pour appliquer à celui-ci une quantité de courant correspondant au déplacement de l'organe de commande, déterminée à partir d'une loi de correspondance prédéterminée (15) et de moyens de cumul (16) des déplacements successifs de l'actionneur lors de ses différentes commandes, mis à jour après chaque nouvelle commande de celui-ci, pour asservir la position de l'actionneur (3) à la position de l'organe de commande (2), **caractérisé en ce que** l'on filtre les quantités de courant inférieures à un seuil prédéterminé et on cumule ces dernières pour les restituer à l'actionneur lorsque ce cumul est suffisant pour activer l'actionneur.

2. Procédé selon la revendication 1, **caractérisé en ce que** l'on étalonne (11) la commande d'alimentation de l'actionneur à chaque passage en position extrême de la course de déplacement de l'organe de commande.

3. Dispositif de commande d'un actionneur électrique (3) d'activation d'un système fonctionnel, notamment d'un frein secondaire de véhicule automobile, par la mise en oeuvre d'un procédé selon l'une quelconque des revendications précédentes, du type comportant un organe de commande (2) actionnable par un utilisateur pour piloter l'alimentation de l'actionneur, comportant :

   a) des moyens (10) d'estimation des déplacements de l'organe de commande (2), en sens et en amplitude, le long d'une course de déplacement de celui-ci entre des positions extrêmes de commande de l'actionneur, et
   b) des moyens d'analyse (12,13,14,15,16) de ces déplacements pour en tirer une information de commande de moyens d'alimentation (17) de l'actionneur pour appliquer à celui-ci une quantité de courant correspondant au déplacement de l'organe de commande, déterminée par ces moyens d'analyse à partir d'une loi de correspondance (15) prédéterminée et stockée dans ceux-ci et de moyens (16) de cumul des déplacements successifs de l'actionneur lors de ses différentes commandes, mis à jour après chaque nouvelle commande de celui-ci par ces moyens d'analyse, afin d'asservir la position de l'actionneur à la position de l'organe de commande, **caractérisé en ce qu'**il comporte des moyens de filtrage des quantités de courant inférieures à un seuil prédéterminé et des moyens de cumul de ces dernières pour les restituer à l'actionneur lorsque ce cumul est suffisant pour activer l'actionneur.

4. Dispositif selon la revendication 3, **caractérisé en ce qu'**il comporte des moyens d'étalonnage (11) des moyens de commande de l'alimentation de l'actionneur à chaque passage en position extrême de la course de déplacement de l'organe de commande.

**5.** Dispositif selon la revendication 3 ou 4, **caractérisé en ce que** l'organe de commande comporte un levier (2).

**6.** Dispositif selon la revendication 5, **caractérisé en ce que** les moyens d'estimation des déplacements de l'organe de commande comportent un capteur de position (10) du levier.

**7.** Dispositif selon l'une quelconque des revendications 3 à 6, **caractérisé en ce que** l'organe de commande est associé à des moyens de freinage variable de son déplacement le long de sa course de déplacement.

**8.** Dispositif selon la revendication 7, **caractérisé en ce qu'**il comporte des moyens de diagnostic (18) de son fonctionnement.

**9.** Dispositif selon l'une quelconque des revendications 3 à 8, **caractérisé en ce que** l'actionneur comporte un moteur électrique (8) associé à des moyens d'enroulement /déroulement (9) d'au moins un câble (4,5) d'actionnement du système fonctionnel.

**Claims**

**1.** Method for controlling an electric actuator (3) activating a functional system, notably a secondary brake for a motor vehicle, of the type comprising a control member (2) which can be actuated by a user in order to control the power supply to the actuator, comprising the following steps:

a) the movements of the control member (2), in direction and amplitude, along a travel path thereof between extreme control positions of the actuator are estimated, and
b) these movements are analysed in order to derive control information for the power supply means (17) to the actuator (3) in order to apply to the latter a quantity of current corresponding to the movement of the control member, determined on the basis of a predetermined rule of correspondence (15) and means (16) for accumulating the successive movements of the actuator during its different controls, updated after each fresh control thereof, in order to subjugate the position of the actuator (3) to the position of the control member (2), **characterised in that** the quantities of current below a predetermined threshold are filtered and these latter are accumulated in order to restore them to the actuator when the accumulated amount is sufficient to activate the actuator.

**2.** Method according to Claim 1, **characterised in that** the control of the power supply to the actuator is calibrated (11) each time the end position of the travel path of the control member is passed.

**3.** Device for controlling an electric actuator (3) activating a functional system, notably a secondary brake of a motor vehicle, by carrying out a process according to any one of the preceding claims, of the type comprising a control member (2) which can be actuated by a user in order to control the power supply to the actuator, comprising:

a) means (10) for estimating the movements of the control member (2), in direction and amplitude, along a travel path thereof between the end control positions of the actuator, and
b) means (12,13,14,15,16) for analysing these movements in order to derive therefrom control information for the power supply means (17) for the actuator in order to apply thereto a quantity of current corresponding to the movement of the control member, determined by these analysing means from a predetermined law of correspondence (15) and stored therein and means (16) for accumulating the successive movements of the actuator during its different commands, updated after each fresh command thereof by these analysing means, in order to subjugate the position of the actuator to the position of the control member, **characterised in that** it comprises means for filtering the quantities of current below a predetermined threshold and means for accumulating the latter in order to restore them to the actuator when the accumulated amount is sufficient to activate the actuator.

**4.** Device according to Claim 3, **characterised in that** it comprises means (11) for calibrating the control means for the power supply to the actuator each time the end position of the travel path of the control member is passed.

**5.** Device according to Claim 3 or 4, **characterised in that** the control member comprises a lever (2).

**6.** Device according to Claim 5, **characterised in that** the means for estimating the movements of the control member comprising a position sensor (10) for the lever.

**7.** Device according to any one of Claims 3 to 6, **characterised in that** the control member is associated with means for variable braking of its travel along its travel path.

**8.** Device according to Claim 7, **characterised in that** it comprises means (18) for diagnosing its operation.

**9.** Device according to any one of Claims 3 to 8, **characterised in that** the actuator comprises an electric motor (8) associated with means for reeling / unreeling (9) at least one actuating cable (4,5) for the functional system.

**Patentansprüche**

**1.** Verfahren zum Steuern eines elektrischen Stellgliedes (3) für die Betätigung eines funktionalen Systems, insbesondere einer Parkbremse eines Kraftfahrzeugs, des Typs, der ein Steuerorgan (2) umfasst, das durch einen Anwender betätigbar ist, um die Versorgung des Stellgliedes zu steuern, wobei das Verfahren die folgenden Schritte umfasst:

a) Schätzen der Verlagerungen des Steuerorgans (2) hinsichtlich Richtung und Amplitude längs eines Verlagerungswegs des Steuerorgans zwischen den Extrem-Steuerpositionen des Stellgliedes und
b) Analysieren dieser Verlagerungen, um daraus Informationen für die Steuerung der Versorgungsmittel (17) des Stellgliedes (3) zu entnehmen, um in dieses eine Strommenge zu schikken, die der Verlagerung des Steuerorgans entspricht, die anhand eines vorgegebenen Korrespondenzgesetzes (15) bestimmt wird, und um daraus Steuerinformationen für Mittel (16) für die Kumulation aufeinander folgender Verlagerungen des Stellgliedes in diesen verschiedenen Steuerungen, die nach jeder neuen Steuerung des Stellgliedes aktualisiert werden, zu entnehmen, um die Position des Stellgliedes (3) auf die Position des Steuerorgans (2) zu regeln, **dadurch gekennzeichnet, dass** die Strommengen unterhalb eines vorgegebenen Schwellenwertes gefiltert werden und diese Letzteren kumuliert werden, um sie bei dem Stellglied wiederherzustellen, wenn diese Kumulation ausreicht, um das Stellglied zu betätigen.

**2.** Verfahren nach Anspruch 1, **dadurch gekennzeichnet, dass** die Steuerung der Versorgung des Stellgliedes bei jedem Durchgang durch die Extremposition der Verlagerungsbahn des Steuerorgans kalibriert wird.

**3.** Vorrichtung zum Steuern eines elektrischen Stellgliedes (3) für die Betätigung eines funktionalen Systems, insbesondere einer Parkbremse eines Kraftfahrzeugs, durch Ausführen eines Verfahrens nach einem der vorhergehenden Ansprüche, des Typs, der ein Steuerorgan (2) umfasst, das durch einen Anwender betätigbar ist, um die Versorgung des Stellgliedes zu steuern, mit:

a) Mitteln (10) zum Schätzen der Verlagerungen des Steuerorgans (2) hinsichtlich Richtung und Amplitude längs eines Verlagerungswegs des Organs zwischen den Extrem-Steuerpositionen des Stellgliedes und
b) Mitteln (12, 13, 14, 15, 16) für die Analyse dieser Verlagerungen, um daraus Steuerinformationen für Versorgungsmittel (17) des Stellgliedes zu entnehmen, um in dieses eine der Verlagerung des Steuerorgans entsprechende Strommenge zu schicken, die durch diese Analysemittel anhand eines vorgegebenen Korrespondenzgesetzes (15) bestimmt und darin gespeichert wird, und um daraus Steuerinformationen für Mittel (16) für die Kumulation aufeinander folgender Verlagerungen des Stellgliedes bei seinen unterschiedlichen Steuerungen, die bei jeder neuen Steuerung des Stellgliedes durch diese Analysemittel aktualisiert werden, zu entnehmen, um die Position des Stellgliedes auf die Position des Steuerorgans zu regeln, **dadurch gekennzeichnet, dass** sie Mittel zum Filtern der Strommengen, die kleiner als ein vorgegebener Schwellenwert sind, und Mittel zum Kumulieren dieser Letzteren, um sie bei dem Stellglied wiederherzustellen, wenn diese Kumulation für die Aktivierung des Stellgliedes ausreicht, umfasst.

**4.** Vorrichtung nach Anspruch 3, **dadurch gekennzeichnet, dass** sie Kalibrierungsmittel (11) für die Mittel zum Steuern der Versorgung des Stellgliedes bei jedem Durchgang durch eine Extremposition des Verlagerungswegs des Steuerorgans umfasst.

**5.** Vorrichtung nach Anspruch 3 oder 4, **dadurch gekennzeichnet, dass** das Steuerorgan einen Hebel (2) umfasst.

**6.** Vorrichtung nach Anspruch 5, **dadurch gekennzeichnet, dass** die Mittel zum Schätzen der Verlagerungen des Steuerorgans einen Sensor (10) für die Position des Hebels umfassen.

**7.** Vorrichtung nach einem der Ansprüche 3 bis 6, **dadurch gekennzeichnet, dass** dem Steuerorgan Mittel zum veränderlichen Abbremsen seiner Verlagerung längs seines Verlagerungswegs zugeordnet sind.

**8.** Vorrichtung nach Anspruch 7, **dadurch gekennzeichnet, dass** sie Mittel (18) für die Diagnose ihrer Funktionsweise umfasst.

**9.** Vorrichtung nach einem der Ansprüche 3 bis 8, **dadurch gekennzeichnet, dass** das Stellglied einen Elektromotor (8) umfasst, dem Mittel (9) für die Aufwicklung/Abwicklung wenigstens eines Betätigungsseils (4, 5) des funktionalen Systems zugeordnet sind.

EP 1 003 656 B1

FIG.1

FIG.2

Consigne levier

$\Delta c$

t0

t0+n

temps

## FIG.3

Tension

Tp

temps

## FIG.4